# EUROPEAN PATENT SPECIFICATION

(11) **EP 0 865 851 B1**
(45) Date of publication and mention of the grant of the patent: **20.09.2000**
(21) Application number: 98104920.8
(22) Date of filing: 18.03.1998
(51) Int. Cl.: B23B 1/00, B23B 27/04

(54) **Clamping device for a cutting insert**
Spannvorrichtung für einem Schneideinsatz
Dispositif de serrage pour une plaquette de coupe

(30) Priority: 19.03.1997 SE 9701003
(43) Date of publication of application: 23.09.1998
(73) Proprietor: SANDVIK AKTIEBOLAG, 811 81 Sandviken (SE)
(72) Inventor: Brask, Karl-Göran, 811 30 Sandviken (SE); Hansson, Per, 805 96 Gävle (SE)
(74) Representative: Taquist, Lennart

(56) References cited:
- DE-A- 3 319 799
- US-A- 2 293 006

## Description

The present invention relates to a clamping device for a cutting insert, in particular for an insert for the turning of grooves and parting, in accordance with the preamble of claim 1, and as known from DE-A-3 319 799.

Cutting inserts for, for example, grooving and parting are clamped in holders of the blade type, in order to achieve narrow widths of cut. Further, the term "blade type" also includes slitting cutters and circular saw blades.

In US-A-4 801 224 a clamping device for a cutting insert in a holder of blade type is described, including a cutting insert which can be clamped in a slot in the blade. The cutting insert is clamped by the spring action which is created by deflection of a clamping finger which is an integral part of the holder. In order to press the cutting insert into its correct position in the slot, a special installation tool is used which consists of a rod with two pins in the one end surface. Admittedly this device functions satisfactorily but it nevertheless suffers from certain drawbacks. For example, the fact that the cutting insert itself forces the spring clamp finger upwards each time a cutting insert is mounted, causing a certain wear of the contact surfaces of the clamping finger which works against the cutting insert, which over a longer period damages the said contact surface, such that the cutting insert no longer sits with the same stability which it had at the beginning. Therefore the entire the blade holder must be exchanged.

Also in US-A-4 588 333 a clamping device in a blade holder is described, according to which the cutting insert is clamped in a slot by spring action which is created by the deflection of a clamping finger which is integrated into the blade holder. According to this design the cutting insert is pressed into the insert pocket by the operator, by pushing the end surface of a hard rod or bar against the front part of the cutting insert. In a manner similar to that in US-A-4 801 224 the cutting insert is then prized out by applying one of the two pins on the said rod behind the cutting insert and levering it out. Even with this design the contact surface of the holder, which acts against the cutting insert, wears each time a cutting insert is inserted or extracted. Further, even in this case, there is the inconvenience that the installation tool requires space.

In EP-A-259 847 a blade holder with a slot for receiving the cutting insert is described, plus an additional slot for the mounting of a clamping screw, which when activated forces the blade part between said two slots and presses it against the cutting insert, whereby the insert is clamped. Also here a certain wear occurs when installing the cutting insert into and removing the cutting insert from the slot in which the insert is to sit. Furthermore the clamping screw can cause certain problems, by limiting the amount of play and giving inadequate clamping force.

DE-A-3 319 799, which represents the nearest prior art document, teaches a design for the clamping of a cutting insert in a blade holder, according to which a clamping screw including a roller part presses with increasing radius against a round rod, which in turn presses downwards against the cutting insert but this invention does not permit a generally horizontal force which would pull the insert into the insert seat thus ensuring good positional accuracy. The design is complicated and entails in addition no torque acting inwards into the insert pocket, to lock the cutting insert firmly with a distinct abutment against the rear abutment surface in the slot which receives the insert. The member (5) equivalent to the tensioning roller (6) in the application has a purely cylindrical shape which means that there is nothing in the interplay betwwen the member and the receiving cavity 3, in the carrier which will hinder axial movment of the member.

The prime purpose of the present invention is consequently to, as far as is ever possible, avoid wear of the holder abutment surfaces which work against the cutting insert.

Another purpose of the present invention is to maintain a large clamping force for the cutting insert during a long period of time.

Yet another purpose of the present invention is to attain the most exact positioning of the the cutting insert possible when clamping, with distinct abutment against a rear abutment surface in the slot which receives the insert.

These and still other purposes have been successfully achieved by designing a clamping device for a cutting insert, which comprises the features given in the *"characterized by"* part of claim 1. In order to illustrate but not limit the invention it will now be more closely described with reference to the attached drawings. These are presented in brief herewith:
Figure 1 shows a cutting insert for grooving and/or parting mounted in a clamping device according to the invention, in perspective obliquely from above.
Figure 2 shows the same clamping device as figure 1, straight from side.
Figure 3 illustrates the mounting of the clamping roller in the device according to figure 1, in perspective obliquely from above.
Figure 4 illustrates also the assembly of the clamping device according to the same design as in figure 3, straight from the side.
Figure 5 shows a cutting insert intended to be mounted in a clamping device according to the figures 1, 2 and 3.
Figures 6 and 7 illustrates another possible cutting insert intended to be assembled in a clamping device according to the figures 1, 2 and 3.
Figures 8 and 9 shows still another cutting insert, intended to be mounted in a clamping device according to figures 1, 2 and 3.
Figures 10a, 10B and 10c show the tensioning roller intended to be mounted in a clamping device according to figures 1, 2 and 3.
Figures 11a, 11B and 11c show another possible embodiment of a tensioning roller to be used according to the invention.
Figures 12a, 12B and 12c show still another embodiment of a tensioning roller according to the invention.
Figures 13a and 13B show an additional embodiment of a tensioning roller according to the invention.
Figure 14 shows an additional embodiment of the tensioning roller according to the invention.
Figures 15a and 15b show one more embodiment of the tensioning roller according to the invention.

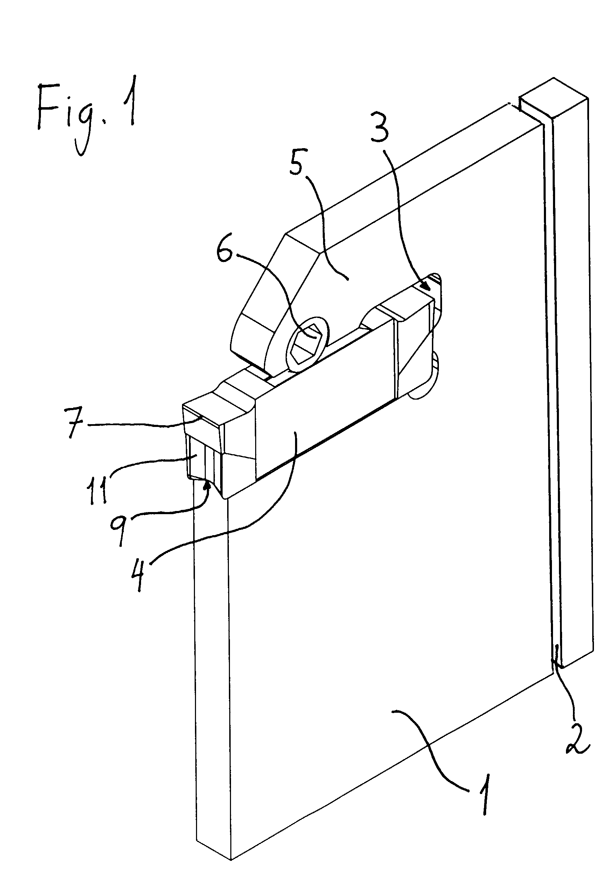

In figure 1 a blade holder in general is designated with 1. This blade holder, like those in the remaining figures, can be of any length desired, which is illustrated in section 2.

In connection with the upper corner of the forward end of the blade holder, a recess or a slot 3 is provided, in which a cutting insert 4 can be inserted and clamped. The blade holder comprises an integrated upper, somewhat springy clamp 5, which in turn includes a tensioning roller 6, which is brought to press onto and hence, firmly clamp the cutting insert 4.

A double headed insert 4 is shown in the figure, which feature a cutting edge 7,7' in either direction. This improves cutting economy by allowing the insert to be turned half a revolution when the one edge is worn out. The invention is not however limited to the use of double-edged cutting inserts, but even inserts with only one cutting edge can be taken into consideration. There should however be an abutment 8 at the end side of the insert slot 3, so that the cutting insert gets a well defined radial position. Further the cutting insert can exhibit a substantially V-shaped groove 9 on its lower side, which is brought to abut against a corresponding, substantially V-shaped rib 10 in the slot. Corresponding ribs and grooves can also exist on the short sides 11 of the cutting insert and abutment 8 of the slot. These cooperating ribs and grooves can also is inverted, such that the ribs are replaced by grooves and grooves replacedby ribs. Further the cross section need not be substantially V-shaped but can for example be formed as a segment of a circle. The abutment surface 8 and the side of the insert 11 can also be wholly plane.

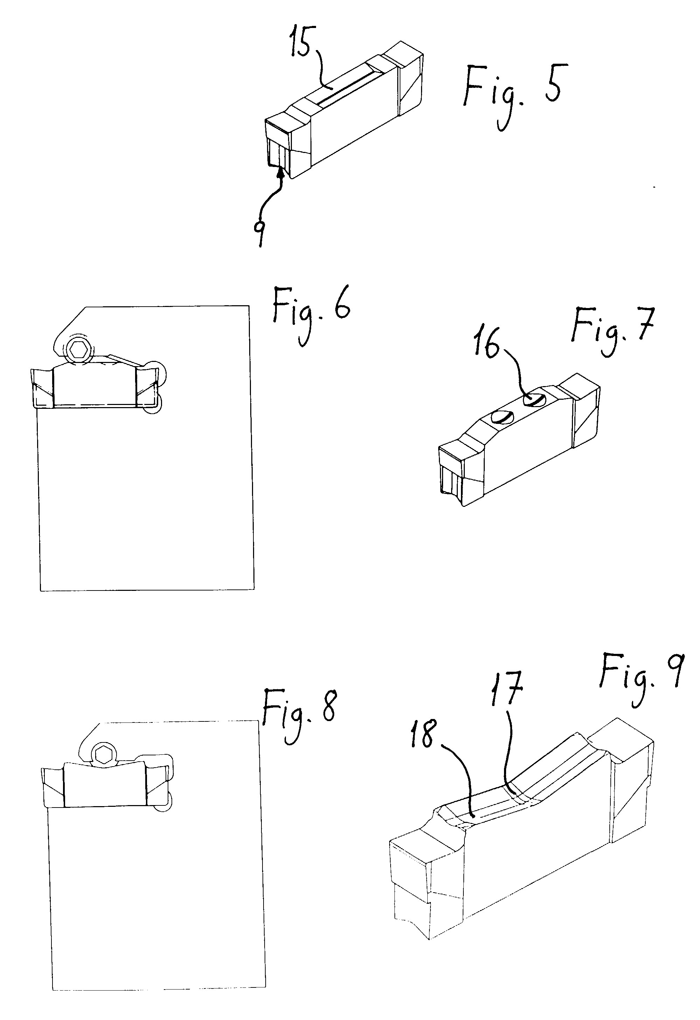

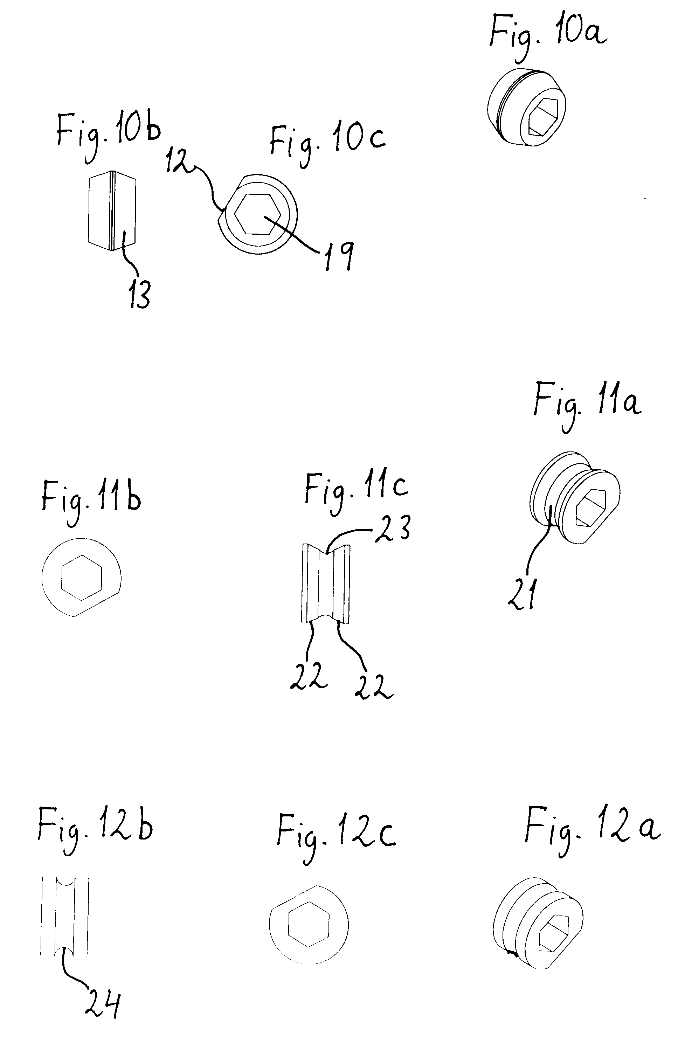

The tensioning roller 6 in figs 1-3 has the shape shown in fig 10a-c. In principle it has the form of two truncated identically shaped cones, the bottom surfaces of which abut against each other, wherein a segment is cut away, such that a planar surface 12 is created. Further the tensioning roller features a central recess 19, to enable the roller to be rotated with a suitable tool, such as an allan key. The two side surfaces of the conical parts 13 are brought to abut partly against an opposing, rounded, essentially V-shaped surface in the recess 14 the of the upper clamp, and partly against an essentially V-shaped groove 15 (see. fig 5) on the upper side of the cutting insert.

A tensioning roller with a shape according to fig 10a-c can also be brought into engagement with cutting inserts with other shapes than those shown in fig 1, 2 and 5. Consequently the upper side of the cutting insert can exhibit two cavities 16 in accordance with figs 6 and 7, wherein the cross section of said cavities essentially agrees with that of the tensioning roller. Naturally only one cavity is required for an insert with one cutting edge. Further the same type of tensioning roller can be brought into engagement with cutting inserts according to figs, 8 and 9. The upper side of these inserts slopes from both ends downwards towards a lower part at the centre of the upper side. In addition the upper side shows a substantially V-shaped groove, the cross section of which is in agreement with the shape of the tensioning roller.

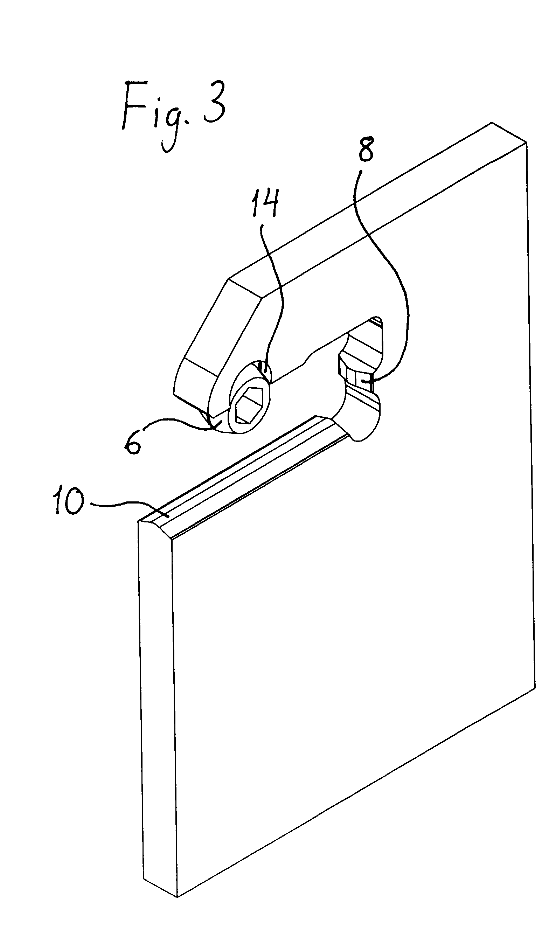

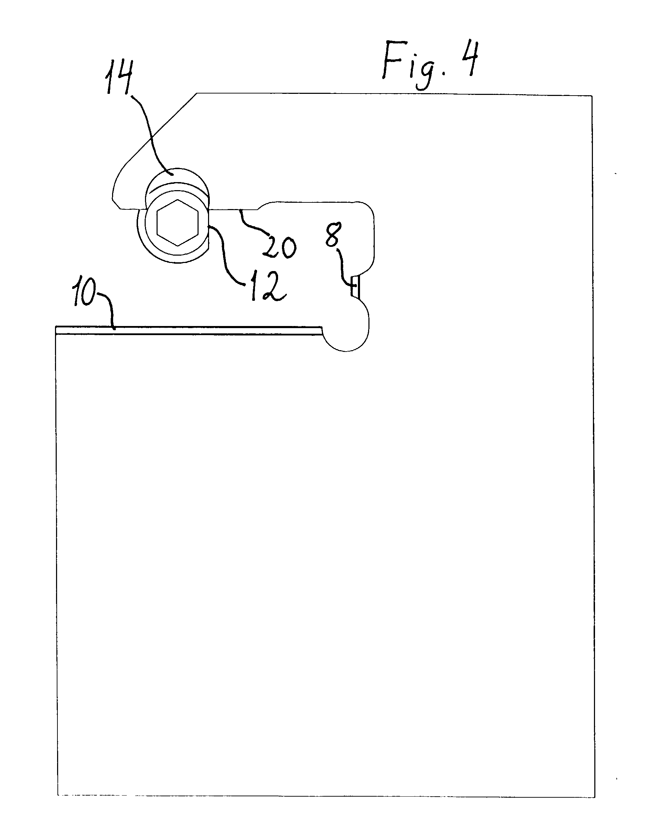

When the roller is to be installed it must be rotated so that the planar surface 12 is in principle vertical, i.e. at a right angle to the upper limiting surface 20 of slot 3. Subsequently the roller is pressed into recess 14 from below (see figs 3 and 4), which can be accomplished completely without resistance or by overcoming a light click action. Once the roller has been put in position in the recess 14, the roller can be rotated in either direction so that the planar surface 12 takes up a position other than the vertical, whereby the the roller is locked in recess 14.

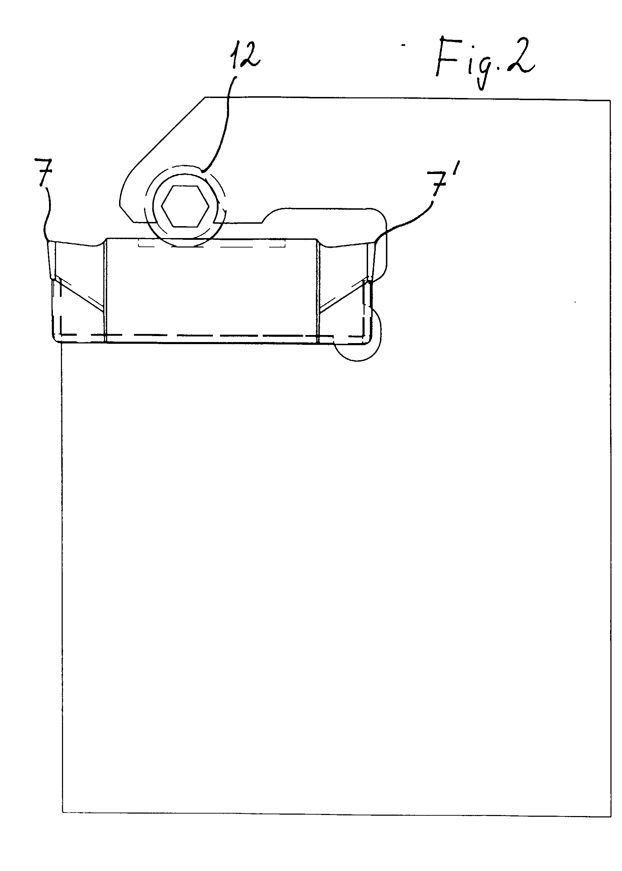

When an insert is to be installed in the insert seat, the tensioning roller is first rotated so that the planar surface 12 is brought to lie straight downwards, that is to say substantially planar parallel with surface 20. Thereby the roller goes free from the insert 4 which can then be moved into contact with contact surface 8. The tensioning roller is then rotated so that its side surfaces 13 are brought to press against the groove 15 in the upper side of the insert. By rotating the insert anti-clockwise in figure 2, the insert is also brought into distinct contact with the rear contact surface 8. When the insert is to be released the tensioning roller is turned clockwise as seen in fig.2, until the planar surface 12, faces downwards, towards the upper surface of the insert. Thereby a play between the insert and roller is reestablished, whereby the insert is free and can be pulled out of the slot. It should also be noted that, no contact occurs between the insert and the upper limiting surface 20, of the slot.

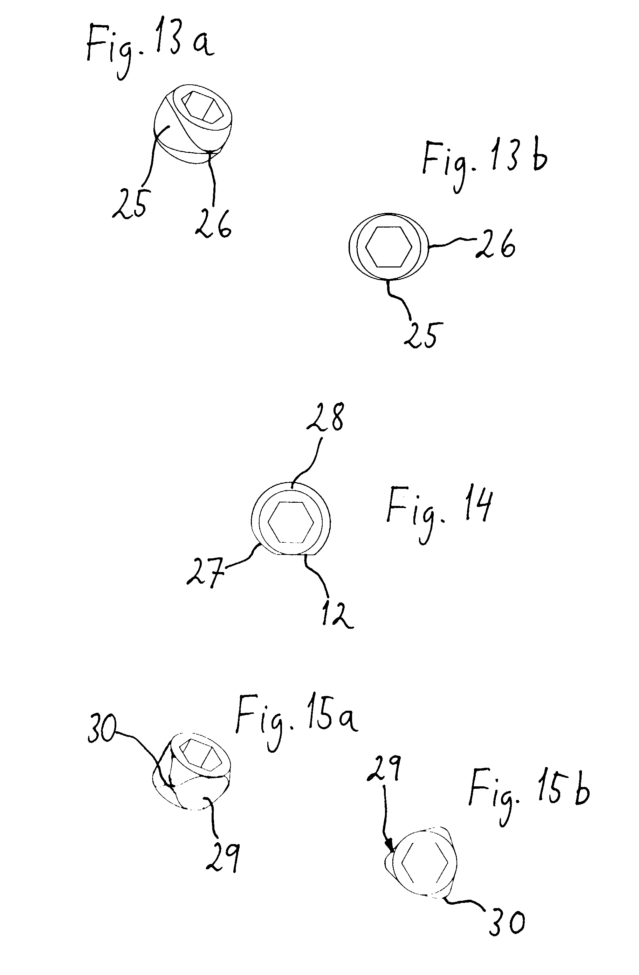

The tensioning roller can even be given other shapes than those seen in figs, 10a-c, whereby the only limitations are that the roller is locked axially and in the recess 14, which is matched to the shape of the roller, plus that the roller can clamp an insert. Therefore a tensioning roller with a substantially V-formed groove around the surface on the sides of the conical parts 21 is shown in figs. 11a-c, whereby the recess for the clamp 14, and the upper side of the insert have corresponding ribs. The tensioning roller will come to lie against the insert and the recess with its two flank surfaces 22, in this situation the middle surface 23, of the insert is free of contact with any other surface. Futher the roller can be designed with a central, groove 24 (see figs 12a-c) substantially with the shape of a segment of a circle in its casing surface. Thereby the insert respectively the recess can be shaped with the corresponding central, rounded rib.

Tensioning rollers according to figs. 10-12 are, if one excepts the planar surface 12, rotationally symmetrical. In order to facilitate clamping and give a gradually increasing counter torque for the tensioning roller, they can however be shaped with an asymmetrical contact surface, for example with increasing radius. Thus a tensioning roller is shown with chamfered side walls of the conical sections in figs. 13 a, b, which flow out into clamping parts 26, the contact of which against the upper side of the insert means maximum clamping force.

Figure 14 shows a tensioning roller with a "tension intensifying" part 27 which gives a step free clamping from a tension free condition, when the planar contact surface 12 faces towards the insert, to the position where maximum clamping effect is achieved when the round contact surface 28 has constant and maximum radius.

Figures 15 a, b, illustrate a further design with chamfered surfaces on the side surfaces of the conical areas, more specifically three chamfered surfaces 29. These are slightly convex and have have their parts with the smallest radius at the middle of the chamfered surface. They connect with each other via part 30 at the maximum radius. When the part 30 has been rotated so that it lies in contact with the insert, maximum clamping force has been achieved. At the part with minimum radius the roller runs free from the insert.

The actual blade holder is normally produced in a suitable steel, such as tool steel. The roller can be manufactured in e.g. hardened steel, high speed steel or cemented carbide.

Through the invention of said tension roller 6 a number of advantages have been achieved. A very large number of installations and removals of inserts can be carried out without any wear occurring on the insert seat, which, otherwise would have necessitated a change of blade holder. If, for some reason the roller should be damaged, only it needs to be exchanged, not the entire blade holder.

## Claims

1. An arrangement for the fastening of a cutting insert (4) in a blade holder (1), in particular for the turning of grooves and parting, wherein the blade holder (1), comprises a slot (3), which receives said insert (4), the slot (3) being limited along its upper side (20) by a clamp (5), and at its rear end by a contact surface (8), the said clamp (5) on said upper side (20), features a recess (14) which accommodates a tensioning roller (6), *characterized in,* that said tensioning roller (6), acts directly on the upper surface of said insert (4) and is provided so that when the roller (6) is rotated so that the peripheral surface nearest the insert (4) moves in a direction towards said rear contact surface (8) the insert (4) is brought into distinct contact with the rear surface (8) and the roller (6) also presseds against the upper side of the insert (4) hence clamping the insert against the lower surface of the slot (10).

2. An arrangement according to claim 1. whereby a tension roller (6) and a recess (14) are shaped with matching male and female parts which fix the roller (6) in the axial direction.

3. An arrangement according to claims 1 and 2, whereby the tensioning roller (6) incorporates a planar surface (12), which makes possible the introduction of the roller (6) into the recess (14) plus the free movement of the insert relative to the roller (6) when installing the insert in the slot (3).

4. An arrangement according to any of the previous claims, whereby the tensioning roller (6) shows a rib which runs centrally around the side surfaces of the double conical part (fig. 10), a substantially V-shaped groove (fig 11), which runs centrally, or a groove with a shape matching the segment of a circle (24), which runs centrally.

5. An arrangement according to any of the previous claims, whereby the tension roller shows a surface part formed by the side walls of the conical parts with increasing radius in order to make possible step free increase of the clamping force against the insert (4).

6. A method for the fastening of an insert in a blade holder using an arrangement as claimed in claim 1, (20), characterized in that when said roller is rotated so that its lower peripheral surface moves towards the rear contact surface (8) a force is exerted on the insert which first pushes the insert into distinct contact with the rear surface (8) and secondly clamps the insert against the lower surface of the slot (10).

7. A method according to claim 6, whereby the tensioning roller (6), incorporates along the side walls of the conical sections a planar surface (12), which is directed towards the upper side of the insert (4) when the insert is pushed into the slot (3), under which circumstances a gap exists between the roller (6) and the insert (4), after which the roller (6) is rotated so that the planar surface is directed in another direction and instead a part of the rollers round sides of the conical parts are brought to press against the upper surface of the insert (4), thus a force is exerted on the insert (4) which first pushes the insert (4) into distinct contact with the rear surface (8) and secondly clamps the insert (4) against the lower surface of the slot (10).

## Patentansprüche

1. Anordnung für die Befestigung eines Schneideinsatzes (4) in einem Schneidenhalter (1), insbesondere für das Drehen von Nuten und das Abstechen, wobei der Schneidenhalter (1) einen Schlitz (3) aufweist, der den Einsatz (4) aufnimmt, wobei der Schlitz (3) an seiner oberen Seite (20) durch eine Klemmvorrichtung (5) und sein hinteres Ende durch eine Kontaktfläche (8) begrenzt wird, wobei die Klemmvorrichtung (5) an der oberen Seite (20) eine Aussparung (14) besitzt, die eine Spannrolle (6) aufnimmt bzw. unterbringt, **dadurch gekennzeichnet, daß** die Spannrolle (6) direkt auf die obere Fläche des Einsatzes (4) wirkt und derart ausgestattet ist, daß, wenn die Rolle (6) gedreht wird, dann die Umfangsfläche, die dem Einsatz (4) am nächsten ist, sich in Richtung der hinteren Kontaktfläche (8) bewegt, wobei der Einsatz (4) in deutlichen Kontakt mit der hinteren Fläche (8) gebracht wird und die Rolle (6) auch gegen die obere Seite des Einsatzes (4) drückt und somit den Einsatz gegen die untere Fläche des Schlitzes (10) spannt.

2. Anordnung nach Anspruch 1, wobei eine Spannrolle (6) und eine Ausnehmung (14) mit zueinander passenden Vater- und Mutterstücken gebildet sind, die die Rolle (6) in axialer Richtung fixieren.

3. Anordnung nach einem der Ansprüche 1 und 2, wobei die Spannrolle (6) eine ebene Fläche (12) aufweist, welche die Einführung der Rolle (6) in die Ausnehmung (14) und zusätzlich die freie Bewegung des Einsatzes relativ zu der Rolle (6) möglich macht, wenn der Einsatz in dem Schlitz (3) installiert wird.

4. Anordnung nach einem der vorherigen Ansprüche, wobei die Spannrolle (6) eine Rippe, die mittig um die Seitenflächen des doppelkegeligen Teils (Figur 10) läuft, eine im wesentlichen V-förmige Nut (Fig. 11), die mittig verläuft, oder eine Nut mit einer auf ein Kreissegment (24) abgestimmten Form, die zentral verläuft, zeigt.

5. Anordnung nach einem der vorherigen Ansprüche, wobei die Spannrolle einen Oberflächenteil zeigt, der mit ansteigendem Radius durch die Seitenwände der konischen Abschnitte gebildet wird, um ein stufenloses Erhöhen der Spannkraft gegen den Einsatz (4) zu ermöglichen.

6. Verfahren zur Befestigung eines Einsatzes in einem Schneidenhalter, der eine Anordnung, wie in Anspruch 1 beansprucht, verwendet, **dadurch gekennzeichnet, daß** dann, wenn die Rolle gedreht wird, so daß sich ihre untere Umfangsfläche zu der hinteren Kontaktfläche (8) bewegt, eine Kraft auf den Einsatz ausgeübt wird, die als erstes den Einsatz in deutlichen Kontakt mit der hinteren Fläche (8) bringt und als zweites den Einsatz gegen die untere Fläche des Schlitzes (10) spannt.

7. Verfahren nach Anspruch 6, wobei die Spannrolle (6) entlang der Seitenwände der konischen Abschnitte eine ebene Fläche (12) aufweist, die zu der oberen Seite des Einsatzes (4) gerichtet ist, wenn der Einsatz in den Schlitz (3) gedrückt wird, wobei unter diesen Umständen eine Lücke zwischen der Rolle (6) und dem Einsatz (4) besteht, wobei nachdem die Rolle (6) gedreht wird, so daß die ebene Fläche in eine andere Richtung zeigt und statt dessen ein Abschnitt der runden Seiten der konischen Abschnitte der Rolle dazu gebracht werden, gegen die obere Fläche des Einsatzes (4) zu drücken, somit eine Kraft auf den Einsatz (4) ausgeübt wird, die zuerst den Einsatz (4) in eindeutigen Kontakt mit der hinteren Fläche (8) bringt und zweitens den Einsatz (4) gegen die untere Fläche des Schlitzes (10) spannt.

## Revendications

1. Dispositif destiné au serrage d'une plaquette de coupe (4) dans un porte-outil en lame (1), en particulier pour le tournage de rainures et le tronçonnage, dans laquelle le porte-outil en lame (1) comprend une fente (3) qui reçoit ladite plaquette (4), ladite fente (3) étant limitée le long de sa face supérieure (20) par une pince (5), et à son extrémité arrière par une surface d'appui (8), ladite pince (5) sur ladite face supérieure (20), présentant un évidement (14) qui loge un galet de tension (6), caractérisé en ce que ledit galet de tension (6) agit directement sur la surface supérieure de ladite plaquette (4) et est prévu de façon à ce que, lorsque le galet (6) est tourné de manière à ce que la surface périphérique la plus proche de la plaquette (4) se déplace dans une direction vers ladite surface d'appui arrière (8), la plaquette (4) soit amenée en contact franc avec la surface arrière (8) et que le galet (6) soit également pressé contre la face supérieure de la plaquette (4) en serrant ainsi la plaquette contre la surface inférieure de la fente (3).

2. Dispositif selon la revendication 1, dans lequel ledit galet de tension (6) et un évidement (14) ont une forme comportant des parties mâle et femelle correspondantes qui fixent le galet (6) dans la direction axiale.

3. Dispositif selon les revendications 1 et 2, dans lequel le galet de tension (6) comporte une surface plane (12), ce qui rend possible d'une part l'introduction du galet (6) dans ledit évidement (14), et d'autre part le déplacement libre de la plaquette par rapport au galet (6) lors de l'installation de la plaquette dans la fente (3).

4. Dispositif selon l'une quelconque des revendications précédentes, grâce auquel le galet de tension (6) présente une nervure qui s'étend de façon centrale autour des surfaces latérales de la double partie conique (figure 10), une rainure sensiblement en forme de V (figure 11), qui s'étend de façon centrale, ou bien une rainure de forme s'adaptant au segment d'un cercle (24), qui s'étend de façon centrale.

5. Dispositif selon l'une quelconque des revendications précédentes, grâce auquel le galet de tension présente une partie de surface formée par les parois latérales des parties coniques avec un rayon croissant de manière à rendre possible une augmentation sans à coup de la force de serrage contre la plaquette (4).

6. Procédé destiné au serrage d'une plaquette dans un porte-outil en lame utilisant un dispositif selon la revendication 1, caractérisé en ce que, lorsque ledit galet est tourné de manière à ce que sa surface périphérique inférieure se déplace vers la surface de contact arrière (8), une force soit exercée sur la plaquette, laquelle pousse tout d'abord la plaquette jusqu'à ce qu'elle vienne en contact franc avec la surface arrière (8), et deuxièmement serre la plaquette contre la surface inférieure de la fente (3).

7. Procédé selon la revendication 6, dans lequel le galet de tension (6) comporte, le long des parois latérales des parties coniques, une surface plane (12), qui est dirigée vers la face supérieure de la plaquette (4) lorsque la plaquette est poussée dans la fente (3), auquel cas un interstice existe entre le galet (6) et la plaquette (4), après quoi le galet (6) est tourné de façon à ce que ladite surface plane soit dirigée dans une autre direction, et qu'à la place une partie desdites parois latérales arrondies des parties coniques du galet soit amenée à presser contre la surface supérieure de la plaquette (4), en exerçant ainsi une force sur la plaquette (4), qui d'une part pousse la plaquette (4) jusqu'à ce qu'elle vienne en contact franc avec la surface arrière (8) et d'autre part serre la plaquette (4) contre la surface inférieure de la fente (3).
